Europäisches Patentamt

European Patent Office

Office européen des brevets

(19)

(11) Publication number: 0 230 736
A2

# (12) EUROPEAN PATENT APPLICATION

(21) Application number: 86309474.4

(22) Date of filing: 04.12.86

(51) Int. Cl.⁴: **E04D 13/00** , **A01M 29/00**

(30) Priority: 09.01.86 GB 8600414

(43) Date of publication of application:
05.08.87 Bulletin 87/32

(84) Designated Contracting States:
AT BE CH DE ES FR GB GR IT LI LU NL SE

(71) Applicant: Simpson, Ronald
Hughes and Hughes Limited Elms Industrial
Estate Church Road
Harold Wood Romford Essex RM3 0HR(GB)

(72) Inventor: Simpson, Ronald
Hughes and Hughes Limited Elms Industrial
Estate Church Road
Harold Wood Romford Essex RM3 0HR(GB)

(74) Representative: Maguire, Peter Albert et al
P.A. Maguire & Co. 12, The Broadway
St. Ives, Cambridgeshire PE17 4BN(GB)

(54) **A barrier device.**

(57) A barrier device of the kind intended to prevent birds from perching or roosting and consisting of a spiked mat (2) having a platform (5) and a series of spikes (4) projecting from the platform and a base member (3) to which the spiked mat is clipped, the base member being elongate and being provided with means (10, 11) extending continuously along its length for releasably holding the spiked mat in place.

Fig.1

EP 0 230 736 A2

## A barrier device

The inventiontion relates to a barrier device and more particularly, but not exclusively, to a barrier device of the kind intended to prevent birds from alighting or roosting on buildings or other structures. Other possible uses for such a barrier device also include its use as a barrier against rodents or as an anti-climb barrier.

It is known to provide barriers for preventing birds from settling or roosting on buildings and one such barrier consists of coating the surface to be protected with a gel or alternatively arranging beads of the gel on the surface. It has been found that birds are unwilling to alight on the sticky or tacky surfaces of certain gels which are thus effective in use, although they can be of limited lifespan, and in any case are difficult to remove.

Other known barriers for preventing birds from alighting comprise physical barriers such as wires stretched across the area above the surface to be protected, and arrangements of spikes or other projections as exemplified by GB 864298 of Kaufmann, GB 2153644A of Sirius Srl and EPC 0011525 of Assouline.

GB 864298 of Kaufmann discloses a barrier device in the form of an elongate metal base member to which are welded a spaced series of pointed spring wire members.

GB 2153644 A of Sirius Srl discloses a barrier device comprising a support plate formed along its length with evenly spaced locating pegs arranged to receive snap-fit barbs, each of which has two legs which form spikes.

EPC 0011525 of Assouline discloses a barrier member comprising an interconnected and spaced series of pyramidal members.

An object of the invention is to provide an inexpensive barrier device of the kind aforesaid, which is of extended life as compared to barrier gels, which is easily fixed in place and which is readily removable and replaceable as required to allow access for maintenance of the building or other structure.

According to the invention there is provided a barrier device of the kind intended to prevent birds from perching or roosting and consisting of an arrangement of spikes adapted to be clipped to a base member which in turn is fixed to the structure to be protected, characterised by a spiked mat having a platform and a series of spikes projecting from the platform, and in that the base member is elongate and is provided with means extending continuously along its length for releasably holding the spiked mat in place. Preferably the spiked mat comprises an elogate platform, the opposite ends of which are formed with projections for spacing apart adjacent mats. Advantageously the platform is flexible in a direction transverse to its length, so that it can be easily adapted to conform to the shape of the building or other structure to be protected. If desired the spikes on the spiked mat may be of different lengths, e.g. they may be two lengths arranged alternately on the mat. The base member may be formed on opposite sides with upwardly extending flanges between which the spiked mat can be snugly received, the flanges being formed with inwardly directed portions adapted to releasably retain a spiked mat disposed between the flanges with a snap action. Preferably the base member is pierced to facilitate its fixing to a structure to be protected.

The invention is diagrammatically illustrated, by way of example, in the accompanying drawings, in which:-

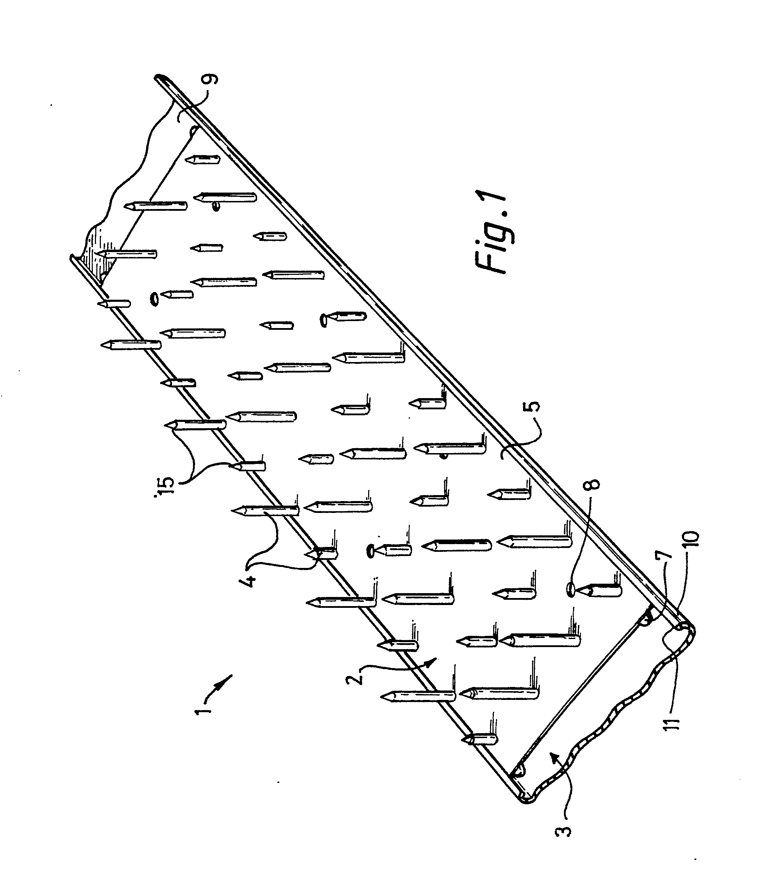

Figure 1 is a perspective view of a barrier device constructed in accordance with the present invention;

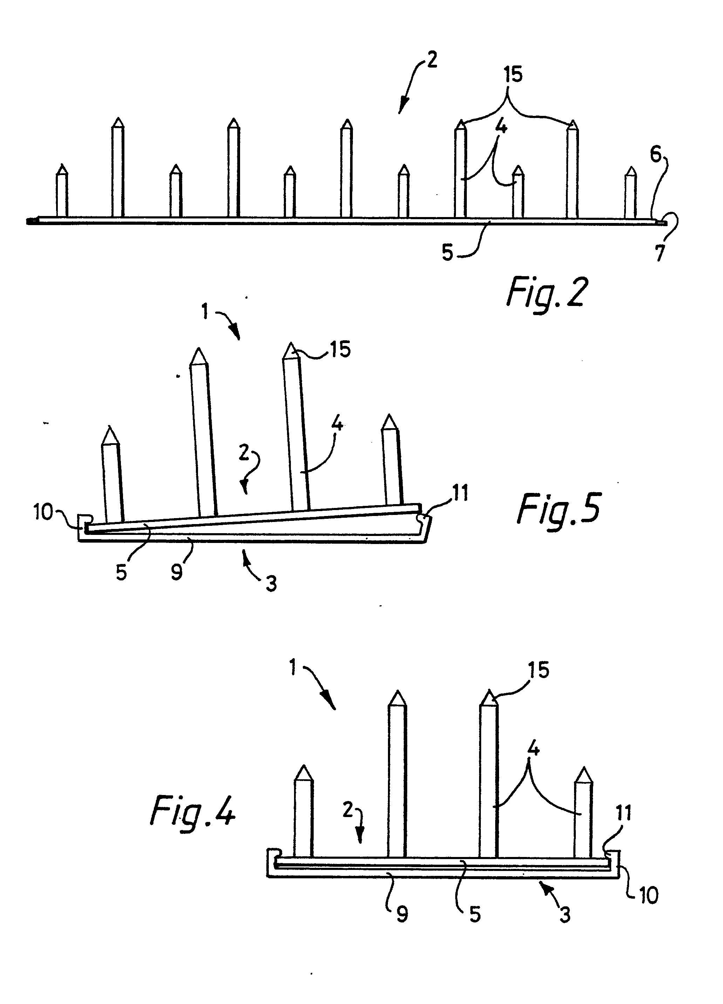

Figure 2 is a side view of a spiked mat which is a component of the barrier device of Figure 1;

Figure 3 is a plan view of the barrier device of Figure 1;

Figure 4 is an end view of the barrier device of Figure 1;

Figure 5 is an end view similar to that of Figure 4 and showing a method of inserting the spiked mat in the base member, which is the other component of the barrier device.

In the drawings there is shown a barrier device 1 intended to prevent birds from alighting or roosting on buildings or other structures and which comprises two components namely a spiked mat 2 and a base member 3 in which the spiked mat 2 is releasably clipped.

Preferably both components 2 and 3 are made from a plastics material since in this way it is possible to make the device inexpensively and to impart the desired qualities of resiliency and long life. Thus for example the spiked mat component can be injection moulded and the base member can be extruded, both using polyvinyl chloride or polypropylene.

The spiked mat 2 comprises a generally rectangular flat strip-like platform 5, the side edges 3 of which are parallel and the ends 6 of which are formed with small projections 7 which act as spacers to maintain a small gap 14 between adjacent mats 2 for the reason set out below.

The platform 5 is formed on one surface with rows of spikes 4, the tips 15 of which are pointed, the arrangement being such that the spikes 4 are alternatively long and short along the length of the platform 5. The platform 5 is formed with holes 8 in case it is wished to fix the spiked mat directly to a surface to be protected.

Normally however the spiked mat is releasably secured in a channel-like base member 3 which consists of a flat base 9 terminated on opposite edges by upstanding flanges 10, which are formed at their tops with inwardly directed beads 11. As shown in Figure 5 of the drawings, the arrangement is such that the spiked mat can be snapped into place in the base member and retained therein by engagement of the beads 11 with the upper portions of the edges 13 of the strip 5 of the spiked mat 2. Alternatively the spiked mat can be installed in the base member by sliding it in endwise.

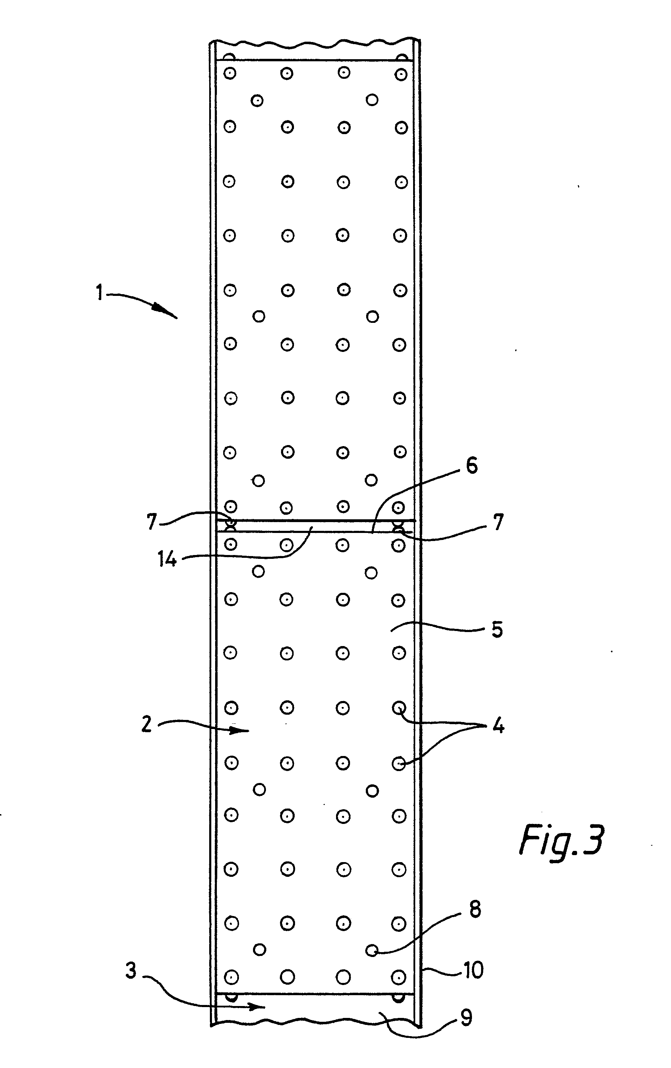

As shown in Figure 3, the base member is preferably arranged to be of considerably greater length than spiked mat and thus a series of spiked mats are used to fill each base member 3. Not only does this aid installation of the barrier device but also it facilitates the temporary removal of the spiked mat, e.g. for maintenance of the building to which the barrier is attached, since normally only short sections of the mat will need to be removed to allow sufficient space for the maintenance to be carried out. The gaps 14 which are maintained between the individual mats 2 by reason of the projections 7, enable a lever to be inserted between the mats to facilitate their removal.

The base member 3 can be secured in position on the building or other structure to be protected by means of an adhesive or by screws or nails inserted through fixing holes 12 pierced in the base 12. Because the barrier device is flexible it can be shaped to conform with the profile of the building and it can be cut to length as necessary.

The invention thus provides a simple, inexpensive but nevertheless effective barrier device of the kind aforesaid.

Although the preferred arrangement is described above, it will be appreciated that modifications are possible without departing from the invention as defined in the following claims. Thus the spiked mat can be fixed to the base member by other forms of continuous connection. For example the base member may be formed with a single centrally placed upright flange arranged to locate with a snap action in a correspondingly shaped recess in the spiked mat. Alternatively the spiked mat could be formed with flanged edged arranged to engage the edges of the base member.

## Claims

1. A barrier device of the kind intended to prevent birds from perching or roosting and consisting of an arrangement of spikes adapted to be clipped to a base member which in turn is fixed to the structure to be protected characterised by a spiked mat (2) having a platform (5) and a series of spikes (4) projecting from the platform, and in that the base member (3) is elongate and is provided with means (10, 11) extending continuously along its length for releasably holding the spiked mat (2) in place.

2. A barrier device according to claim 1, characterised in that the spiked mat (2) comprises an elongate platform (5), the opposite ends (6) of which are formed with projections (7) for spacing apart adjacent mats (2).

3. A barrier device according to claim 1 or claim 2, characterised in that the platform (5) is flexible in a direction transverse to its length.

4. A barrier device according to any preceding claim, characterised in that the spikes (4) on the spiked mat (2) are of different lengths alternately along the platform (5).

5. A barrier device according to any preceding claim, characterised in that the base member (3) is formed on opposite sides with upwardly extending flanges (10) between which the spiked mat (2) can be snugly received, the flanges (10) being formed with inwardly directed portions (11) adapted to releasably retain a spiked mat (2) disposed between the flanges (10) with a snap action.

6. A barrier device according to any preceding claim, characterised in that the base member (3) is pierced with holes (12) to facilitate its fixing to a structure to be protected.

Fig.1

Fig.2

Fig.5

Fig.4

*Fig.3*